# EUROPÄISCHE PATENTSCHRIFT

(11) **EP 2 817 179 B1**
(45) Veröffentlichungstag und Bekanntmachung des Hinweises auf die Patenterteilung: **15.06.2016**
(21) Anmeldenummer: 13702742.1
(22) Anmeldetag: 25.01.2013
(51) Int. Cl.: B60R 22/44

(54) **VORRICHTUNG ZUM AUFWICKELN UND ABWICKELN EINES SICHERHEITSGURTES**
APPARATUS FOR TAKING UP AND TAKING OFF A SAFETY BELT
DISPOSITIF POUR ENROULER ET DÉROULER UNE CEINTURE DE SÉCURITÉ

(30) Priorität: 20.02.2012 DE 102012003225
(43) Veröffentlichungstag der Anmeldung: 31.12.2014
(73) Patentinhaber: Autoliv Development AB, 447 83 Vårgårda (SE)
(72) Erfinder: JABUSCH, Ronald, 25336 Elmshorn (DE)
(74) Vertreter: Wagner, Carsten
(86) Internationale Anmeldenummer: PCT/EP2013/000219
(87) Internationale Veröffentlichungsnummer: WO 2013/124027

(56) Entgegenhaltungen:
- EP-A1- 0 581 228
- DE-A1-102008 028 531
- GB-A- 2 123 271
- GB-A- 2 306 294
- US-A- 4 301 977
- US-A- 5 297 752
- US-A1- 2001 008 261

## Beschreibung

Die Erfindung betrifft eine Vorrichtung zum Aufwickeln und Abwickeln eines Sicherheitsgurtes, wobei beim Aufwickeln mindestens zwei Betriebszustände unterschiedlich hoher Krafteinwirkung auf den Sicherheitsgurt realisierbar sind bzw. realisiert werden, wobei die Betriebszustände abhängig sind vom Aufrollgrad des Sicherheitsgurtes.

Solche Vorrichtungen sind aus dem Stand der Technik bekannt, wobei diesbezüglich auf DE 101 62 374 C1, EP 0 568 820 B1, DE 197 04 103 C2 sowie GB 2 306 294 A, US 4,301,977, US 5,297,752, die den Oberbegriff des Anspruchs 1 bildet, GB 2 123 271 A, US 2001/0008261 A1, DE 10 2008 028 531 A1 und EP 0 581 228 A1 verwiesen wird.

In EP 0 568 820 B1 wird ein Gurtaufroller offenbart mit Zugentlastung für Sicherheitsgurt-Rückhaltesysteme in Fahrzeugen, mit einer zwischen einem gehäusefesten Teil und der das Gurtband aufnehmenden Gurtspule wirksamen Aufrollfeder, deren erstes Ende an dem gehäusefesten Teil angreift, mit einem in den Kraftfluß zwischen Aufrollfeder und Gurtspule eingefügten, drehbar gelagerten Klinkenrad, woran das zweite Ende der Aufrollfeder triebschlüssig angeschlossen ist, mit einer schwächer als die Aufrollfeder dimensionierten, spiralförmigen Hilfsfeder, die ihrerseits zwischen dem Klinkenrad und der Gurtspule wirksam ist, und einer mit dem Klinkenrad zusammenwirkenden Klinke, die in Abhängigkeit von einem Steuerkriterium die Drehbewegung des Klinkenrades sperrt oder freigibt, wobei die Klinke durch einen schwenkbar gelagerten Steuerhebel in das Klinkenrad einsteuerbar ist, der reibschlüssig an ein getriebenes Zahnrad eines Untersetzungsgetriebes angekoppelt ist, welches die Drehbewegung der Gurtspule untersetzt.

In DE 197 04 103 C2 ist offenbart ein Gurtroller mit einer zwischen einem Gehäuseteil und der das Gurtband aufnehmenden Gurtwelle wirksamen Aufwickelfeder und mit einer dazu über ein Klinkenrad in Reihe geschalteten schwächer als die Aufwickelfeder ausgelegten Komfortfeder, wobei die Komfortfeder mit ihrem inneren Ende an der Gurtwelle und mit ihrem äußeren Ende an dem Klinkenrad und die Aufwickelfeder mit ihrem inneren Ende an dem Klinkenrad und mit dem äußeren Ende an dem Gehäuseteil angeschlossen ist, und wobei zur Ansteuerung der Federn eine auf das Klinkenrad einwirkende und von einer die Umschaltung steuernden Steuereinrichtung in Eingriff mit dem Klinkenrad gebrachte oder außer Eingriff damit gehaltene Sperrklinke vorgesehen ist und die Steuereinrichung ein Zahnradgetriebe mit einem auf dem Ende der Gurtwelle sitzenden Ritzel und mit einem die Sperrklinke betätigenden Schaltrad aufweist, wobei die Schaltbewegung durch Eingriff zweier Zahnräder erzeugt wird, von denen eines eine veränderte Zahntiefe aufweist derart, dass eine in Abhängigkeit von der Umdrehungszahl der Gurtwelle arbeitende Schalteinrichtung nach anfänglichem Gurtbandauszug mit Beginn des Aufwikkelvorganges auf die Komfortfeder umschaltet und nach festgelegter Umdrehungszahl der Gurtwelle auf die Aufwickelfeder zurückschaltet, wobei zur Ausbildung des Zahnradgetriebes das außenverzahnte Zahnrad mindestens jeweils im Teileingriff einerseits mit der Innenverzahnung eines drehbar an dem Gehäuseteil gelagerten Hohlradschaltringes und andererseits mit dem außenverzahnten Ritzel steht, welches Schaltrad unter fortwährendem Verzahnungseingriff zwischen den Verzahnungen von Ritzel und Hohlradschaltring von der Schalteinrichtung beaufschlagt radial hin- und herbeweglich angeordnet und mit einem die Sperrklinke zwischen deren Eingriffsstellung mit dem Klinkenrad und der Freigabestellung verstellenden Schalthebel verbunden ist und den Schalthebel bei der Schaltung hin- und herbewegt, wobei das Schaltrad in Richtung Volleingriff mit der Innenverzahnung des Hohlradschaltringes vorgespannt ist und die Zahnhöhen der Innenverzahnung des Hohlradschaltringes einerseits und der Außenverzahnung des Schaltrades andererseits derart ausgelegt sind, dass die in Teileingriff stehenden Verzahnungen an beiden Enden der Innenverzahnung bei Relativdrehung übereinander hinwegratschen.

DE 101 62 374 C1 offenbart einen Sicherheitsgurtaufroller, insbesondere für den Einsatz in Kraftfahrzeugen, mit einem fahrzeugsensitiv und/oder gurtbandsensitiv angesteuerten Blockiersystem, mit einer die Gurtwelle in Gurtaufwickelrichtung vorspannenden Aufwickelfeder sowie mit einer auf die Gurtwelle einwirkenden, von einem Elektromotor angetriebenen Straffeinrichtung, wobei der Elektromotor mit der Gurtwelle über ein zwischengeschaltetes Getriebe kuppelbar ist, wobei der Gurtaufroller ein aus zwei in Reihe zueinander angeordneten und unterschiedliche Federkennlinien aufweisenden Federn bestehendes, mittels eines Schaltelementes zwischen zwei Betriebszuständen schaltbares Komfortfedersystem aufweist, wobei der Elektromotor mit einem in unterschiedlichen Drehrichtungen antreibbaren Übertragungsrad gekoppelt ist, welches mit dem Schaltelement des Komfortfedersystems derart zusammenwirkt, dass das Schaltelement in Abhängigkeit von der Drehrichtung des Übertragungsrades in unterschiedliche Schaltpositionen überführbar ist und dadurch das Komfortfedersystem zwischen dessen unterschiedlichen Betriebszuständen schaltet.

Bei all diesen Vorrichtungen zum Aufwickeln und Abwickeln eines Sicherheitsgurtes besteht der Nachteil, dass diese konstruktiv relativ aufwendig und somit kostenträchtig sind. Aufgabe der vorliegenden Erfindung ist es daher, eine Vorrichtung zum Aufwickeln und Abwickeln eines Sicherheitsgurtes bereitzustellen, wobei beim Aufwickeln mindestens zwei Betriebszustände unterschiedlich hoher Krafteinwirkung auf den Sicherheitsgurt realisierbar sind bzw. realisiert werden, wobei die Betriebszustände abhängig sind vom Aufrollgrad des Sicherheitsgurtes, die kostengünstig herzustellen ist und darüber hinaus eine hohe Reproduzierbarkeit der einzelnen Betriebszustände zueinander gewährleistet.

Diese Aufgabe wird erfindungsgemäß gelöst durch eine Vorrichtung nach Anspruch 1.

Die erfindungsgemäße Vorrichtung zum Aufwickeln und Abwickeln eines Sicherheitsgurtes weist lediglich ein Aufwickelkraftelement, beispielsweise und insbesondere in Form eines Federelementes, auf und ist frei von einem weiteren Aufwickelkraftelement, beispielsweise und insbesondere einem Federelement.

Erfindungsgemäß ist ein Betriebszustand realisierbar bzw. wird realisiert mittels mindestens eines Getriebes, nämlich mittels eines Planetengetriebes, in dem eine im Vergleich zum auf den Sicherheitsgurt über das Aufwickelkraftelement unterschiedlich hohe Kraft auf den Sicherheitsgurt wirkt. Mittels noch weiter unten erläuternder Punkte ist es dann somit möglich, aufgrund einer Unter- oder Übersetzung des jeweiligen Getriebes mittels lediglich eines Aufwickelkraftelementes, beispielsweise und insbesondere mittels eines Federelementes, mindestens zwei Betriebszustände unterschiedlich hoher Krafteinwirkung auf den Sicherheitsgurt zu realisieren. Erfindungsgemäß gibt es einen Betriebszustand, in dem das Getriebe zwar im Kraftfluß zwischen Aufwickelkraftelement und Sicherheitsgurt bzw. einer damit verbundenen Welle liegt, jedoch das Getriebe aber blockiert ist und sich deshalb als ganzes mitdrehen muss wie ein starrer Körper, so dass die Kraft des Aufwickelkraftelementes als solche am Sicherheitsgurt bzw. an dessen Welle (Gurtwelle) anliegt bzw. angreift; und einen weiteren Betriebszustand, in dem das entsprechende Getriebe im oben genannten Kraftfluß sich befindet und somit wirkt und aufgrund seiner Unter- oder Übersetzung dann entsprechend die Kraft um einen entsprechenden Untersetzungsfaktor vervielfacht bzw. um einen Übersetzungsfaktor verringert bei entsprechend entweder geringerer Dreh- bzw. Wegstrecke der am Getriebe angreifenden Welle bzw. bei einer Übersetzung des Getriebes der umgedrehte Fall (entsprechend geringere Kraft bei größerem Weg).

Durch den Wegfall eines weiteren und ansonsten aus dem Stand der Technik als notwendig erachteten zweiten Aufwickelkraftelementes bei solchen Vorrichtungen zum Aufwickeln und Abwickeln eines Sicherheitsgurtes entfällt somit zunächst eine weitere nicht unbeträchtliche Fehlerquelle in Bezug auf das Einhalten der unterschiedlichen Kraftniveaus der einzelnen Betriebszustände zueinander, wobei auch in konstruktiver Hinsicht es sich bei der erfindungsgemäßen Vorrichtung um eine relativ einfach ausgestaltete Vorrichtung bei entsprechenden Kostenvorteilen handelt.

Die einzelnen Bauteile der erfindungsgemäßen Vorrichtung können metallischer Natur sein oder aus Kunststoff hergestellt sein.

Die Realisierung mittels eines Getriebes, somit der Ersatz eines Aufwickelkraftelementes, insbesondere eines Federelementes, durch ein Getriebe, nämlich ein Planetengetriebe, führt zu einer ausgesprochen hohen Reproduzierbarkeit der Kraftniveaus der mindestens zwei Betriebszustände zueinander, da eine feste Unter- bzw. Übersetzung vom Getriebe bereits vorgegeben ist und die Krafteinwirkung des einen Aufwickelkraftelementes, insbesondere des einen Federelementes, entsprechend reproduzierbar unter- bzw. übersetzt.

Weiterhin ist es erfindungsgemäß, wenn das Getriebe hinsichtlich seiner Funktion mittels eines aktuierbaren bzw. aktuierten Getriebesperrelementes, beispielsweise in Form eines Sperrhebels, sperrbar ist bzw. gesperrt wird, wobei im gesperrten Zustand das Getriebe als Ganzes drehbar ist bzw. gedreht wird, wobei es sich in der Praxis als besonders positiv herausgestellt hat und somit erfindungsgemäß ist, wenn im gesperrten Zustand das Getriebesperrelement einen Träger des Planetengetriebes sperrt, wobei das Getriebesperrelement angelenkt ist an einem Getriebering, in dem Zahnräder des Planetengetriebes laufen, wobei der Getriebering in gesperrtem Zustand des Getriebes mitsamt dem Planetengetriebe drehbar ist bzw. gedreht wird, da ohne die Drehung des Getriebes als Ganzes eine Sperrung der Funktion des Aufwickelns des Sicherheitsgurtes, also somit in der Regel ein Sperren der Welle (Gurtwelle) gegeben wäre, so dass dann das Getriebe im gesperrten Zustand als Ganzes drehbar ist, um die eigentlich angreifende Kraft des Aufwickelkraftelementes, insbesondere des Federelementes, ohne einen entsprechenden Unter- oder Übersetzungsfaktor an die Gurtwelle weiterzugeben.

Weiterhin ist es von Vorteil, wenn das Getriebesperrelement aktuierbar ist bzw. aktuiert wird mittels eines in Abhängigkeit des Aufrollgrades des Sicherheitsgurtes agierenden Aktuiermechanismus, um bei entsprechender Dimensionierung für eine jeweilige Vorrichtung ab einem bestimmten Aufrollgrad eine Umschaltung zwischen mindestens zwei Betriebszuständen unterschiedlicher Krafteinwirkung bereitzustellen.

In diesem Kontext ist es besonders vorteilhaft, wenn beim Aktuiermechanismus mittels eines in funktionaler Beziehung zum Aufrollgrad des Sicherheitsgurtes stehenden Steuerrings ein Schalthebelelement ein Steuerhebelelement aktuiert, das wiederum das Getriebesperrelement aktuiert, wobei sich diese Ausführungsform in der Praxis besonderes bewährt hat.

Weiterhin bewährt und somit vorteilhaft haben sich die folgenden weiteren Ausführungsformen:

Der Steuerring weist eine Materialausnehmung oder einen Materialvorsprung zum Aktuieren des Schalthebelelementes auf.

Die geschlossene Außenkontur des Steuerrings legt das Schalthebelelement schocksicher fest.

Der Steuerring wird angetrieben über eine in funktionaler Beziehung zum Aufrollgrad des Sicherheitsgurtes stehende Taumelgetriebescheibe, die in eine innere Verzahnung des Steuerringes antreibend eingreift, wobei letztlich auch eine konventionell ausgestaltete Getriebescheibe bei Eingriff in eine innere Verzahnung des Steuerringes denkbar wäre, jedoch die Taumelgetreibescheibe den Vorteil hat, dass aufgrund der taumelnden Bewegung bei der Drehbewegung auch quasi orthogonal zur eigentlichen wirksamen, antreibenden Drehbewegung eine hierzu nicht wirksame Kraftvektorgröße einwirkt, so dass quasi eine drehende Bewegung zwischen den Zahnrädern der Taumelgetriebescheibe und der inneren Verzahnung des Steuerrings permanent stattfindet. Das Taumelgetriebe wurde gewählt, weil mit nur einem Teil, der Taumelgetriebescheibe, eine große Untersetzung möglich ist. Ein weiterer Vorteil der hohen Untersetzung ist, dass die erforderliche Schaltkraft sehr gering sein darf, da in Gurtbandeinzugsrichtung das Aufwickelkraftelement die Schaltkraft aufbringen muss.

Das Steuerhebelelement wird beim Aufrollen des Sicherheitsgurtes über eine Führungskontur oder Führungskulisse bewegt, so dass zwei, zueinander orthogonale Bewegungsrichtungen ausgeführt werden, so dass ein Eingriff des Getriebesperrelementes am Getriebe realisierbar ist bzw. realisiert wird, da neben einer Drehbewegung orthogonal zu dieser Drehbewegung auch eine verschwenkende bzw. translatorische Komponente gegeben ist, so dass quasi ein Aufeinanderzu- und wegfahren von Steuerhebelelement auf das Getriebesperrelement realisierbar ist bzw. realisiert wird.

In diesem Kontext ist es vorteilhaft, wenn die Führungskontur oder die Führungskulisse sichelförmig ausgestaltet ist, da durch den relativ geringen Anstieg der Kontur auch mit einer geringen Kraft des Aufwickelkraftelementes die benötigte Schaltkraft aufgebracht werden kann.

Die Erfindung wird im nachfolgenden anhand eines Ausführungsbeispieles und den damit verbundenen Figuren 1 bis 14 nicht beschränkend näher erläutert, wobei
- FIG. 1 -: eine perspektivische Explösionszeichnung der wesentlichen Bauteile einer erfindungsgemäßen Vorrichtung darstellt;
- FIG. 2 -: eine perspektivische Darstellung der einzelnen Funktionsgruppen zueinander darstellt;
- FIG. 3 bis 13 -: unterschiedlich kinematische Phasen in teilperspektivischer Ansicht während des Aufrollens (s. Figur 3 bis Figur 10) und des Abrollens (s. Figur 11 bis 13) darstellen und
- FIG. 14 -: ein Kraftwegdiagramm zwischen abgerolltem Sicherheitsgurt und aufgewickeltem Sicherheitsgurt darstellt.

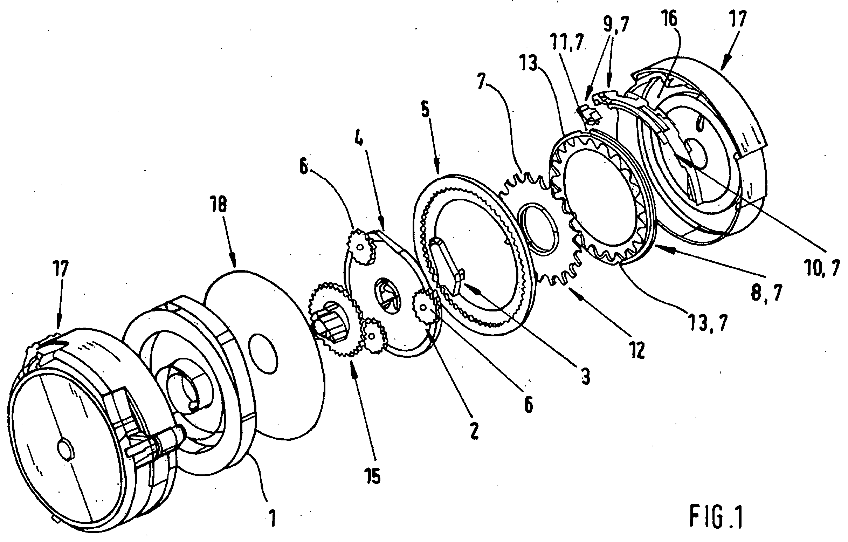

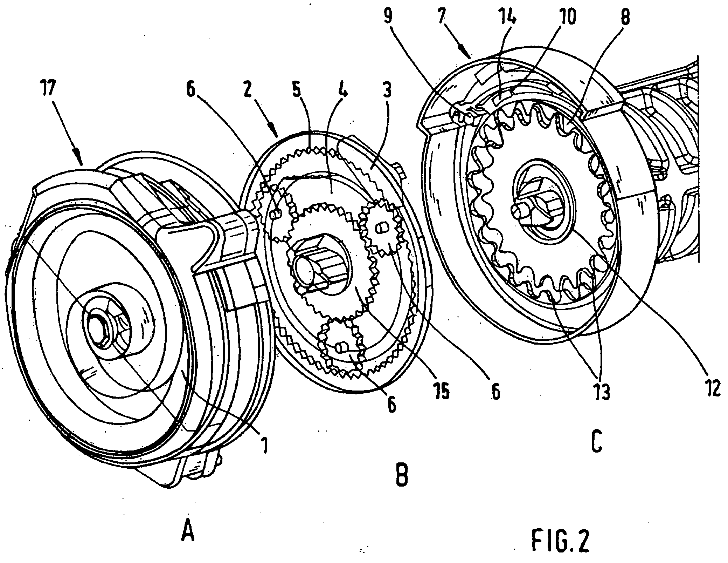

In Figur 1 sind in perspektivischer Explosionszeichnung die wesentlichen Bauteile einer Ausführungsform der erfindungsgemäßen Vorrichtung dargestellt. Grundsätzlich lassen sich die miteinander in Funktionsbeziehung stehenden Bauteile in drei Gruppen einteilen - s. hierzu Figur 2 -, nämlich in eine Aufwickelkraft-Partition, bei der über ein Aufwickelkraftelement und in diesem Fall Federelement 1 in einem dazugehörigen Gehäuseteil 17 - und in der Gesamtheit als sogenannte Federkassette bezeichnet - die zum Aufwickeln eines Sicherheitsgurtes und damit zur Drehung einer entsprechenden (nicht gezeigten) Welle, die unmittelbar in Funktionsbeziehung steht zu einer (nicht gezeigten) Aufwickeleinheit zum Aufwickeln eines Sicherheitsgurtes, notwendige Kraft bereitstellt. Eine weitere Partition ist die Unter- oder Übersetzungs-Partition B, in der die über das Federelement 1 applizierte Aufwickelkraft unter- oder übersetzt wird, so dass bei einer Untersetzung die Kraft in Bezug auf die Untersetzung im Untersetzungsverhältnis verstärkt und die Drehgeschwindigkeit des Teils der (nicht gezeigten) Welle (Gurtwelle) zwischen Aufwickelkraft-Partition A und Unter- oder Übersetzungs-Partition B diesbezüglich um den Faktor der Untersetzung verringert wird. Im Falle einer Übersetzung wäre dies dann entsprechend reziprokal, das heißt, dass sich im Falle einer Übersetzung um den Faktor der Übersetzung die Drehgeschwindigkeit der (nicht gezeigten) Welle, die sich zwischen der Unter- oder Übersetzungs-Partition B und der (noch näher zu erläuternden) Aktuier-Partition C befindet (und sich darüber hinaus weiter nach rechts in Richtung der nicht gezeigten Aufwickeleinheit zum Aufwickeln des Sicherheitsgurtes erstreckt), um den Faktor der Übersetzung sich schneller dreht bei entsprechend bezüglich des Übersetzungsfaktors verkleinerter Kraft zur Drehung dieses Wellenabschnittes.

Die letzte Partition C ist die sogenannte Aktuier-Partition, die in Abhängigkeit vom Aufwickelgrad dafür Sorge trägt, dass über einen noch näher zu erläuternden Aktuiermechanismus 7 ein Getriebesperrelement 3 an einem Getriebe 2 sperrend eingreift, so dass das gesamte Getriebe 2, das als Planetengetriebe 2 ausgestaltet ist, sperrt, das heißt, dass in diesem Fall drei Zahnräder 6 sich nicht weiter drehen können in der inneren Verzahnung 13 des Getrieberinges 5, so dass aufgrund der Tatsache, dass das Getriebesperrelement 3 angelenkt ist am Getriebering 5, wobei das Getriebesperrelement 3 aufgelaufen ist auf einen Materialvorsprung des Trägers 4 des Planetengetriebes 2, der Getriebering 5 nunmehr sich in der Innenseite 16 des Gehäuses bzw. eines Gehäuseteils 17 dreht. Auf diese Art und Weise kommt es somit quasi zu einem Durchdrehen des Getrieberinges 5, so dass es nicht zu einer vollständigen Sperrung des Getriebes kommt bei sperrendem Eingriff des Getriebesperrelementes 3, sondern somit zu einer quasi Abkopplung der in diesem Ausführungsbeispiel vorgesehenen dreifachen Untersetzungswirkung des Planetengetriebes 2, so dass die Aufwickelkraft des Federelementes 1 quasi direkt auf den rechts vom Träger 4 des Planetengetriebes 2 (und nicht gezeigten) zweiten Teils der (nicht gezeigten) Welle unmittelbar übertragen wird (in diesem Fall also ohne die Untersetzung im Verhältnis 1:3).

Der Vollständigkeit halber sei an dieser Stelle erwähnt, dass der erste Teil, der sich links vom Träger 4 des Planetengetriebes 2 befindet - also somit zwischen dem Federelement 1 und dem Träger 4 - unmittelbar angreift an dem Federkrafteinleitungselement 15, das ausgestaltet ist als ein Sonnenrad des Planetengetriebes 2. Der zweite Teil der nicht gezeigten Welle, der sich zwischen dem Träger 4 des Planetengetriebes 2 und der Aktuier-Partition C befindet bzw. durch diese hindurch sich aus dem rechten Gehäuseteil 17 erstreckt, ist unmittelbar mechanisch fest verbunden mit dem Träger 4 des Planetengetriebes 2.

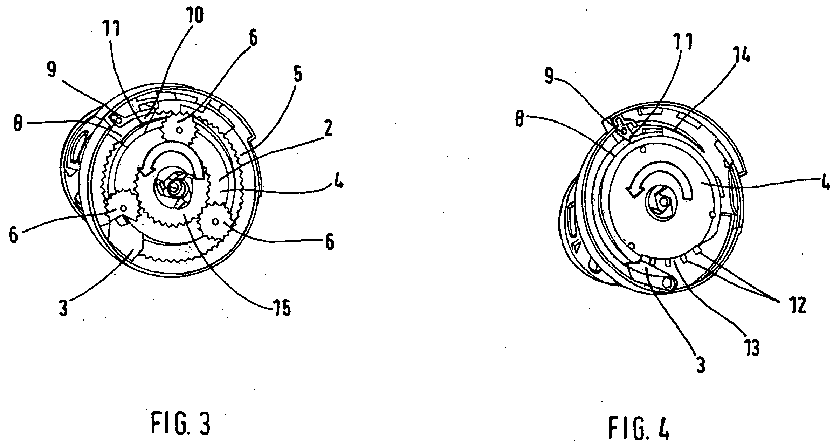

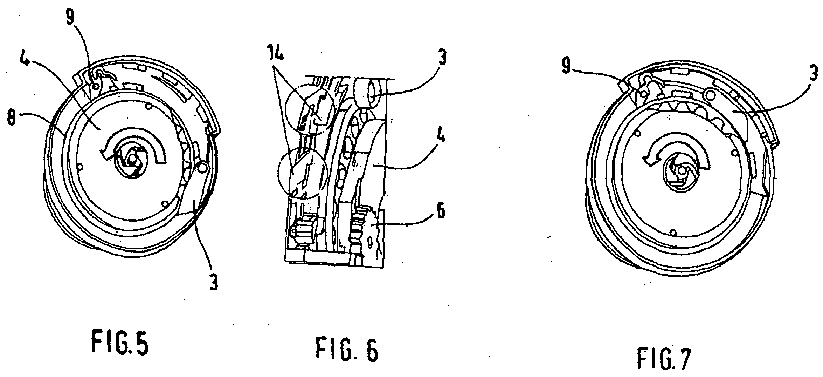

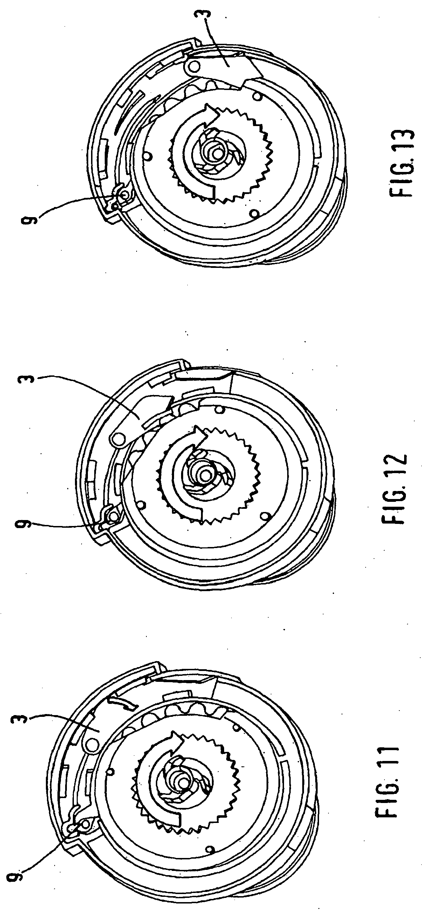

Anhand der Figuren 3 bis 10 werden die unterschiedlich kinematischen Phasen, insbesondere in Bezug auf die Aktuier-Partition C während des Aufrollens des Sicherheitsgurtes aufgezeigt, während die Figuren 11 bis 13 kinematische Phasen während des Abrollens darstellen.

Ausgehend von einem abgerollten Sicherheitsgurt wird dieser freigegeben zum Aufrollen durch Ausrasten einer Gurtzunge, so dass ein entsprechender Passagier eines Fahrzeuges dieses abgeschnallt verlassen kann, während über die Kraft des Federelementes 1 der Sicherheitsgurt beginnt, aufgerollt zu werden, wobei in diesem Zustand das Planetengetriebe 2 gesperrt ist durch das Getriebesperrelement 3 (s. Figur 3). Im weiteren Verlauf des Aufrollens (s. Figur 4) bewegt sich entgegen dem Uhrzeigersinn und synchron zum Getriebering 5 ein Steuerring 8, der eine Materialausnehmung in Form einer Nut 11 aufweist, so dass ein an der Innenseite 16 des Gehäuses bzw. des Gehäuseteils 17 angelenktes Schalthebelelement 9 im Uhrzeigersinn gedreht wird und mit einem zum Steuerring 8 hin orientierten Flügel in die Nut 11 eingreift, so dass bei weiterer Drehung im entgegengesetzten Uhrzeigersinn das Steuerhebelelement 10 über eine Führungskontur 14 im Uhrzeigersinn bewegt wird, so dass zwei, zueinander orthogonale Bewegungsrichtungen ausgeführt werden, nämlich eine in Drehrichtung und eine orthogonal dazu, also parallel zur Erstreckung der nicht gezeigten Welle oder mit anderen Worten derart, dass ein Eingriff des Getriebesperrelementes 3 am Getriebe 2 realisierbar wird, so dass dann das Getriebesperrelement 3 angegriffen wird durch das Steuerhebelelement, um den Träger 4 des Planetengetriebes 2 freizugeben durch eine resultierende Verschwenkungsbewegung des Getriebesperrelementes 3, da dieses angelenkt ist am Getriebering 5 (s. hierzu die Figuren 4 bis 7).

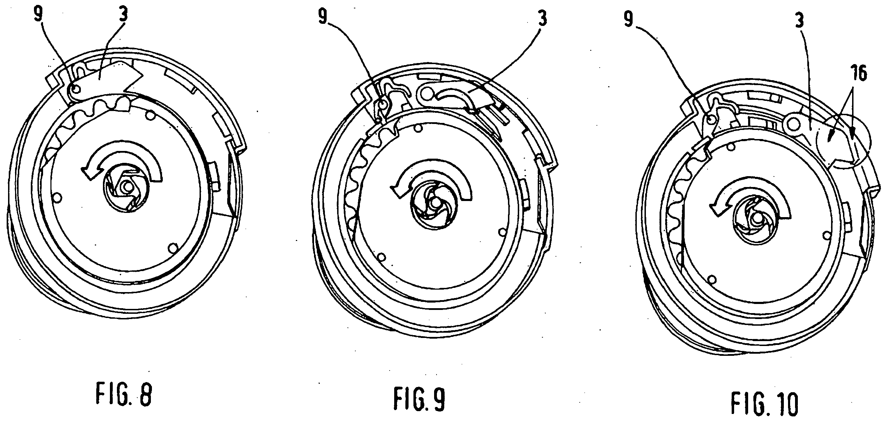

Die Federkraft wird nunmehr quasi multipliziert durch das Untersetzungsverhältnis des Planetengetriebes 2. Bei einer weiteren Drehung im entgegengesetzten Uhrzeigersinn bewegt sich das Getriebesperrelement 3 in die entgegengesetzte Richtung im Vergleich zur Bewegungsrichtung des Federkrafteinleitungselementes 15, also in diesem Fall im Uhrzeigersinn (s. Figuren 8 und 9).

Durch die Dimensionierungen des Gehäuseteils 17 bzw. der Innenseite 16 des Gehäuses wird das Getriebesperrelement 3 in eine Position bewegt, in der sich das Getriebesperrelement 3 quasi an der Innenseite 16 des Gehäuses einloggt, wobei diese Position auch die vollständige Aufwickelposition des Sicherheitsgurtes darstellt.

Ab dem vollständigen Ausgriff des Getriebesperrelementes 3 (s. Figur 8) wirkt dann die um den Faktor der Untersetzung des Planetengetriebes 2 multiplizierte Kraft des Federelementes 1 auf die (nicht gezeigte) Welle.

Ab Figur 11 ist die kinematische Phase des Abrollens gezeigt, bei der das Federkrafteinleitungselement 15 und somit auch der Träger 4 des Planetengetriebes 2 im Uhrzeigersinn gedreht werden, wobei das Schalthebelelement 9 sich dadurch im entgegengesetzten Uhrzeigersinn dreht, so dass das Steuerhebelelement 10 auch im entgegengesetzten Uhrzeigersinn bewegt wird, so dass bei weiterer Drehung des Trägers 4 des Planetengetriebes 2 im Uhrzeigersinn aufgrund der Drehung des Getrieberinges 5 auch im Uhrzeigersinn und in quasi aus der Papierebene herausragenden Richtung, also orthogonal ur Ebene der Drehung des Trägers 4 des Planetengetriebes 2, das Getriebesperrelement 3 entsprechend bewegt/geführt wird, so dass dann wieder ein Eingriff des Getriebesperrelementes 3 am Träger 4 des Planetengetriebes 2 realisiert wird und dann eine Sperrung des Planetengetriebes 2 einsetzt (s. Figur 13).

Somit wird durch die Drehbewegung des Getriebesperrelementes 3 über die Drehbewegung des Getrieberinges 5 im gesperrten Zustand des Planetengetriebes 2 durch die den Steuerring 8 mittels der Taumelgetriebescheibe 12 angreifenden Kraft über die eine innere Verzahnung 13 des Steuerringes 8, bei entsprechender Dimensionierung eine an die Dimensionen angepaßte Bewegung in Drehrichtung als auch orthogonal somit parallel zur nicht gezeigten Welle über die Bewegung über die Führungskontur 14 eine entsprechende Steuerung und somit Aktuierung des Getriebesperrelementes 3 realisiert, da beim Aktuiermechanismus 7 eben mittels eines in funtionaler Beziehung zum Aufrollgrad des Sicherheitsgurtes stehenden Steuerringes 8 das Schalthebelelement 9 das Steuerhebelelement 10 aktuiert, das wiederum das Getriebesperrelement 3 aktuiert.

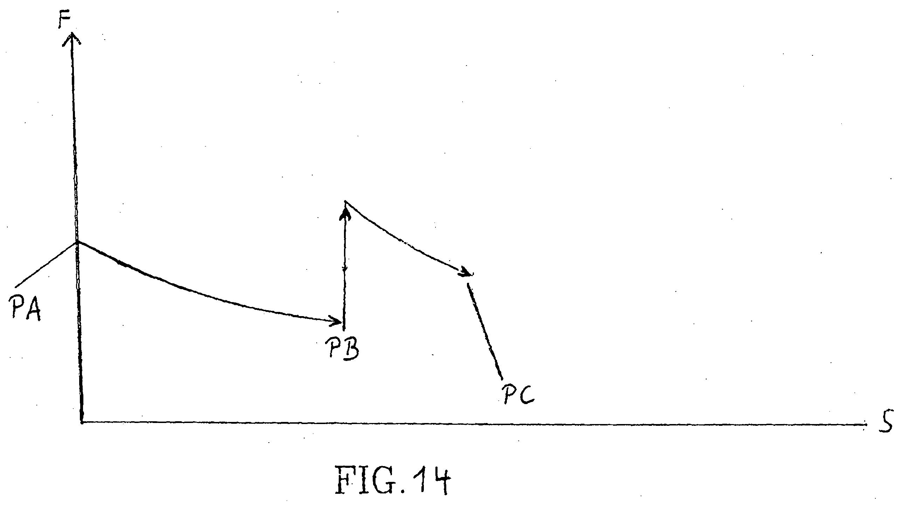

In Figur 14 ist ein Kraftwegdiagramm abgebildet, aus dem die oben beschriebenen einzelnen Phasen beim Aufwickeln eines Sicherheitsgurtes der erfindungsgemäßen Vorrichtung zu erkennen sind. In Punkt PA ist der Sicherheitsgurt zumindest teilweise abgerollt, so dass nach Entriegeln der Sicherheitszunge des Sicherheitsgurtes über die Aufwickelkraft des Federelementes 1 bis zum Punkt PB aufgrund der Sperrung des Planetengetriebes 2 der Sicherheitsgurt mit einer relativ geringen Kraft aufgewickelt wird, um dann in Punkt PB über die Freigabe des Planetengetriebes 2 mittels der Untersetzung im Verhältnis 1:3 dann weiter aufgerollt zu werden, dies jedoch mit einer verdreifachten Kraft; bis der Sicherheitsgurt vollständig aufgerollt ist in Punkt PC, der sogenannten Parkposition. Das Federelement 1 dreht sich dann dreimal schneller. Die Drehgeschwindigkeit der Welle wird in der Praxis eher noch schneller, da das Federelement 1 eine relativ kleine Trägheit aufweist. Zu dem kann das Federelement 1 mit der Untersetzung die Welle leichter antreiben.

Beim Abrollen des Sicherheitsgurtes muß somit über einen relativ kurzen Weg zunächst eine höhere Kraft ausgeübt werden (Weg vom PC zum Punkt PB), um dann nach Sperrung des Planetengetriebes 2 durch die nicht mehr wirksame Untersetzung lediglich mit der relativ geringen Aufwickelkraft des Federelementes 1 den Sicherheitsgurt weiter abzuwickeln (Weg vom Punkt PB zum Punkt PA), um sich dann im Punkt PA anzuschnallen.

## Patentansprüche

1. Vorrichtung zum Aufwickeln und Abwickeln eines Sicherheitsgurtes, wobei beim Aufwickeln mindestens zwei Betriebszustände unterschiedlich hoher Krafteinwirkung auf den Sicherheitsgurt realisierbar sind bzw. realisiert werden, wobei die Betriebszustände abhängig sind vom Aufrollgrad des Sicherheitsgurtes, wobei die Vorrichtung lediglich ein Aufwickelkraftelement (1) aufweist und frei von einem weiteren Aufwickelkraftelement (1) ist, wobei ein Betriebszustand, in dem eine im Vergleich zum auf den Sicherheitsgurt über das Aufwickelkraftelement (1) unterschiedlich hohe Kraft auf den Sicherheitsgurt wirkt, realisierbar ist bzw. realisiert wird mittels mindestens eines Getriebes (2),
wobei es sich beim Getriebe (2) um ein Planetengetriebe (2) handelt,
wobei das Getriebe (2) hinsichtlich seiner Funktion mittels eines aktuierbaren bzw. aktuierten Getriebesperrelementes (3) sperrbar ist bzw. gesperrt wird,
**dadurch gekennzeichnet, dass** im gesperrten Zustand das Getriebe (2) als Ganzes drehbar ist bzw. gedreht wird,
wobei im gesperrten Zustand das Getriebesperrelement (3) einen Träger (4) des Planetengetriebes (2) sperrt, wobei das Getriebesperrelement (3) angelenkt ist an einem Getriebering (5), in dem Zahnräder (6) des Planetengetriebes (2) laufen, wobei der Getriebering (5) im gesperrten Zustand des Getriebes (2) mitsamt dem Planetengetriebe (2) drehbar ist bzw. gedreht wird.

2. Vorrichtung nach Anspruch 1, **dadurch gekennzeichnet, dass** es sich beim Aufwickelkraftelement (1) um ein Federelement (1) handelt.

3. Vorrichtung nach einem der Ansprüche 1 bis 2, **dadurch gekennzeichnet, dass** das Getriebesperrelement (3) akuierbar ist bzw. aktuiert wird mittels eines in Abhängigkeit des Aufrollgrades des Sicherheitsgurtes agierenden Aktuiermechanismus (7).

4. Vorrichtung nach Anspruch 3, **dadurch gekennzeichnet, dass** beim Aktuiermechanismus (7) mittels eines in funktionaler Beziehung zum Aufrollgrad des Sicherheitsgurtes stehenden Steuerrings (8) ein Schalthebelelement (9) ein Steuerhebelelement (10) aktuiert, das wiederum das Getriebesperrelement (3) aktuiert.

5. Vorrichtung nach Anspruch 4, **dadurch gekennzeichnet, dass** der Steuerring (8) eine Materialausnehmung (11) oder einen Materialvorsprung zum Aktuieren des Schalthebelelementes (9) aufweist.

6. Vorrichtung nach Anspruch 5, **dadurch gekennzeichnet, dass** der Steuerring (8) angetrieben wird über eine in funktionaler Beziehung zum Aufrollgrad des Sicherheitsgurtes stehende Taumelgetriebescheibe (12), die in eine innere Verzahnung (13) des Steuerringes (8) antreibend eingreift.

7. Vorrichtung nach einem der Ansprüche 4 bis 6, **dadurch gekennzeichnet, dass** das Steuerhebelelement (10) beim Aufrollen des Sicherheitsgurtes über eine Führungskontur (14) oder Führungskulisse bewegt wird, so dass zwei, zueinander orthogonale Bewegungsrichtungen ausgeführt werden, so dass ein Eingriff des Getriebesperrelementes (3) am Getriebe (2) realisierbar ist bzw. realisiert wird.

8. Vorrichtung nach einem der Ansprüche 4 bis 7, **dadurch gekennzeichnet, dass** die Führungskontur (14) oder die Führungskulisse sichelförmig ausgestaltet ist.

## Claims

1. An apparatus for winding and unwinding a safety belt, wherein at least two operating states with a different level of force applied to the safety belt while winding are realizable or realized, wherein the operating states are dependent on the degree to which the safety belt is wound, wherein the apparatus only has one winding force element (1) and is free from another winding force element (1), wherein an operating state in which a level of force that is different in comparison to that applied to the safety belt by means of the winding force element (1) is realizable or realized by means of at least one gearing (2),
wherein the gearing (2) is a planetary gear (2),
wherein the gearing (2) is lockable or locked with regard to its operation by means of an actuatable or actuated gear locking element (3), **characterized in that** in the locked state, the gearing (2) is rotatable or rotated as a whole,
wherein in a locked state, the gear locking element (3) locks a carrier (4) of the planetary gear (2), wherein the gear locking element (3) is articulated to a gear ring (5) in which gear wheels (6) of the planetary gear (2) run, wherein the gear ring (5) is rotatable or rotated together with the planetary gear (2) when the gearing (2) is in a locked state.

2. The apparatus according to claim 1, **characterized in that** the winding force element (1) is a spring element (1).

3. The apparatus according to one of claims 1 to 2, **characterized in that** the gear locking element (3) is actuatable or actuated by means of an actuating mechanism (7) which acts depending on the degree to which the safety belt is wound.

4. The apparatus according to claim 3, **characterized in that** in the actuating mechanism (7) by means of a control ring (8) in a functional relationship to the degree of winding of a safety belt, an operating lever element (9) actuates a control lever element (10) which in turn actuates the gear locking element (3).

5. The apparatus according to claim 4, **characterized in that** the control ring (8) has a material recess (11) or a material projection for actuating the operating lever element (9).

6. The apparatus according to claim 5, **characterized in that** the control ring (8) is driven by a wobble gear disc (12), which is in a functional relationship with the degree of winding of the safety belt, and drivingly engages in inner teeth (13) of the control ring (8).

7. The apparatus according to one of claims 4 to 6, **characterized in that**, while the safety belt is being wound, the control lever element (10) is moved across a guide contour (14) or guide link such that two directions of movement which are orthogonal to each other are executed so that an engagement of the gear locking element (3) in the gear (2) is realizable or realized.

8. The apparatus according to one of claims 4 to 7, **characterized in that** the guide contour (14) or the guide link is designed in the shape of a crescent.

## Revendications

1. Dispositif pour enrouler et dérouler une ceinture de sécurité, dans lequel, lors de l'enroulement, au moins deux états de fonctionnement mettant en oeuvre une application de force de niveaux différents sur la ceinture de sécurité sont ou peuvent être réalisés, les états de fonctionnement étant fonction du degré d'enroulement de la ceinture de sécurité, le dispositif comportant un seul élément de force d'enroulement (1) et étant dépourvu de tout autre élément de force d'enroulement (1), dans lequel un état de fonctionnement mettant en oeuvre l'application, sur la ceinture de sécurité, d'une force différente de celle agissant sur la ceinture de sécurité par le biais de l'élément de force d'enroulement (1) est ou peut être réalisé au moyen d'au moins un mécanisme de transmission (2),
le mécanisme de transmission (2) étant un train épicycloïdal (2),
le fonctionnement du mécanisme de transmission (2) étant ou pouvant être bloqué au moyen d'un élément de blocage de transmission (3) actionnable ou actionné,
**caractérisé en ce que**, une fois bloqué, le mécanisme de transmission (2) tourne ou peut tourner d'un seul bloc,
dans lequel, dans l'état bloqué, l'élément de blocage de transmission (3) bloque un support (4) du train épicycloïdal (2), l'élément de blocage de transmission (3) étant articulé sur un anneau de transmission (5), dans lequel des roues dentées (6) du train épicycloïdal (2) tournent, l'anneau de transmission (5) tournant ou pouvant tourner conjointement avec le train épicycloïdal (2) quand le mécanisme de transmission (2) est dans l'état bloqué.

2. Dispositif selon la revendication 1, **caractérisé en ce que** l'élément de force d'enroulement (1) est un élément à ressort (1).

3. Dispositif selon l'une des revendications 1 ou 2, **caractérisé en ce que** l'élément de blocage de transmission (3) est ou peut être actionné au moyen d'un mécanisme d'actionnement (7) qui agit en fonction du degré d'enroulement de la ceinture de sécurité.

4. Dispositif selon la revendication 3, **caractérisé en ce que**, pour le mécanisme d'actionnement (7), un élément de levier de commutation (9) actionne un élément de levier de commande (10) au moyen d'un anneau de commande (8) en relation fonctionnelle avec le degré d'enroulement de la ceinture de sécurité, ledit élément de levier de commande actionnant à son tour l'élément de blocage de transmission (3).

5. Dispositif selon la revendication 4, **caractérisé en ce que** l'anneau de commande (8) comporte un évidement de matière (11) ou une saillie de matière pour actionner l'élément de levier de commutation (9).

6. Dispositif selon la revendication 5, **caractérisé en ce que** l'anneau de commande (8) est entraîné par le biais d'un disque de transmission oscillant (12) en relation fonctionnelle avec le degré d'enroulement de la ceinture de sécurité, qui s'engrène dans une denture intérieure (13) de l'anneau de commande (8) de manière à l'entraîner.

7. Dispositif selon l'une des revendications 4 à 6, **caractérisé en ce que** l'élément de levier de commande (10) est déplacé par le biais d'un contour de guidage (14) ou d'une coulisse de guidage lors de l'enroulement de la ceinture de sécurité, de telle manière que deux directions de déplacement, perpendiculaires entre elles, sont exécutées, de telle manière qu'un engrènement entre l'élément de blocage de transmission (3) et le mécanisme de transmission (2) est ou peut être réalisé.

8. Dispositif selon l'une des revendications 4 à 7, **caractérisé en ce que** le contour de guidage (14) ou la coulisse de guidage est conçu(e) en forme de croissant.
